# EUROPEAN PATENT APPLICATION

(11) **EP 2 703 079 A1**
(43) Date of publication of application: **05.03.2014**
(21) Application number: 12776637.6
(22) Date of filing: 26.04.2012
(51) Int. Cl.: B01J 23/78, B01J 23/755, B01J 23/89, C01B 3/40, H01M 8/06

(54) **CATALYST FOR BREAKING DOWN HYDROCARBONS, AND FUEL CELL SYSTEM**

(30) Priority: 27.04.2011 JP 2011099296
(71) Applicant: Toda Kogyo Corporation, Otake-shi, Hiroshima 739-0652 (JP)
(72) Inventor: HONMYO, Torayuki, Otake-shi Hiroshima 739-0652 (JP); TAKAHASHI, Shinji, Otake-shi Hiroshima 739-0652 (JP); HISAYUKU, Yurie, Otake-shi Hiroshima 739-0652 (JP)
(74) Representative: Raynor, Stuart Andrew
(86) International application number: PCT/JP2012/061230
(87) International publication number: WO 2012/147859

(57) **Abstract**

An object of the present invention is to provide a nickel-containing catalyst having a strong correlation between a carrier and nickel, which is excellent in anti-coking property and is optimum for DSS operation, and a fuel cell system. The catalyst for decomposing hydrocarbons according to the present invention comprises a compound comprising at least nickel and aluminum, and metallic nickel having a particle diameter of 1 to 25 nm, in which bond energies between the metallic nickel and the compound comprising at least nickel and aluminum in the catalyst are 874.5 to 871.5 eV (Ni 2p_{1/2}), 857 to 853 eV (Ni 2p_{3/2}) and 73.5 to 70 eV (Al 2p), and an activation energy of the catalyst is 4 x 10⁴ to 5 x 10⁴ J/mol.

## Description

### TECHNICAL FIELD

The present invention relates to a nickel-containing catalyst for decomposing hydrocarbons having a strong correlation between a carrier and nickel, which is excellent in anti-coking property, is optimum for DSS operation, and has a high ability for reforming high-carbon (C) number hydrocarbon raw materials.

### BACKGROUND ART

For the purpose of prevailing fuel cells, study on various designs of systems for the fuel cells has now been progressed from the viewpoints of both of their quality and costs. In view of a good quality, a ruthenium catalyst is optimum as a catalyst for reforming hydrocarbons, but the ruthenium catalyst is expensive and disadvantageous in view of costs. On the contrary, from the viewpoint of low costs, a nickel catalyst is optimum, but has such a problem that the nickel catalyst is hardly incorporated as a functional material into existing systems. In particular, the nickel catalyst has a noticeable problem concerning a poor anti-coking property.

The coking is such a phenomenon that, for example, when a hydrocarbon raw material is subjected to reforming reaction to produce hydrogen, carbon monoxide and carbon dioxide, the reaction of the hydrocarbon raw material into carbon monoxide or carbon dioxide is partially not well functioned, so that carbon is deposited on a surface of a metal as a catalyst. If such a phenomenon further proceeds, CNT (carbon nanotube) is deposited so as to cover the surface of the metal catalyst, which finally results in no opportunity for allowing the raw material gas and the metal catalyst to contact with each other and no contribution to the reaction. When the amount of such a CNT-coated metal catalyst is increased, the catalyst as a result tends to exhibit no catalytic activity. In addition, the deposition of CNT on the metal catalyst tends to not only induce a pressure loss through the catalyst layer, but also cause deposition of CNT within the catalyst molded body, so that oxidation of the carbon and generation of hydrogen are caused when contacted with a water vapor to convert the solid into a gas. As a result, the volume of the catalyst molded body by itself tends to be instantaneously swelled up and broken into a powder. With the breakage of the catalyst molded body, the catalyst layer tends to suffer from remarkable pressure loss and cause clogging at the worst case.

The ruthenium catalyst has a high anti-coking property, but tends to cause undesirable increase in costs of fuel cell systems owing to the use of ruthenium as a rare metal.

On the other hand, as the nickel catalyst, there are known Ni/Al₂O₃ catalysts and those catalysts formed by adding Mg, Na or the like to the Ni/Al₂O₃ catalysts. These catalysts have been industrially used on the premise that they are almost continuously operated over a predetermined period of time under predetermined conditions, and have a low anti-coking property. Therefore, the catalysts are unsuitable for use in environmental conditions severer than those upon the above industrial use, such as the conditions for fuel cell systems exposed to large variation in loads.

In addition, as a more efficient operation method for domestic fuel cell systems, there has been adopted a DSS (Daily Start-up and Shutdown) operation method. In this operation method, operation of the fuel cell systems is initiated in the morning in which electric power demand becomes large, and stopped in the night. After stopping the operation of the fuel cell systems, a reforming device is purged with a city gas to drive out combustible gases such as hydrogen and methane therefrom. Upon the purging, the catalysts tend to suffer from coking. Therefore, there is an increasing demand for inexpensive nickel catalysts having a more excellent anti-coking property.

There have been proposed the following conventional techniques concerning nickel catalysts having a high anti-coking property (Patent Documents 1 to 4).

### CITATION LIST

### PATENT LITERATURE

Patent Document 1: Japanese Patent Application Laid-Open (KOKAI) No. 2003-135967
Patent Document 2: Japanese Patent Application Laid-Open (KOKAI) No. 2005-224722
Patent Document 3: Japanese Patent Application Laid-Open (KOKAI) No. 2006-061759
Patent Document 4: Japanese Patent Application Laid-Open (KOKAI) No. 2008-018414

### SUMMARY OF THE INVENTION

### PROBLEM TO BE SOLVED BY THE INVENTION

In Patent Document 1 (Japanese Patent Application Laid-Open (KOKAI) No. 2003-135967), there is described the Ni steam-reforming catalyst having a particle diameter of 1 to 10 nm. In Patent Document 2 (Japanese Patent Application Laid-Open (KOKAI) No. 2005-224722), there is described the autothermal reforming catalyst comprising Ni and/or Fe having a particle diameter of 1 to 20 nm. In Patent Document 3 (Japanese Patent Application Laid-Open (KOKAI) No. 2006-061759), there is described the steam-reforming catalyst comprising metallic ruthenium having a size of 1 to 10 nm and constitutional elements comprising nickel, magnesium and aluminum. In Patent Document 4 (Japanese Patent Application Laid-Open (KOKAI) No. 2008-018414), there is described the nickel catalyst comprising silica.

However, any of the techniques described in Patent Documents 1 to 4 tend to be insufficient to obtain a catalyst having an excellent anti-coking property which is optimum for DSS operation and has a strong correlation between a carrier and nickel.

In consequence, an object of the present invention is to provide a nickel-containing catalyst having a strong correlation between a carrier and nickel and a fuel cell system.

### MEANS FOR SOLVING THE PROBLEM

The above object or technical task can be achieved by the following aspects of the present invention.

That is, according to the present invention, there is provided a catalyst for decomposing hydrocarbons, comprising a compound comprising at least nickel and aluminum, and metallic nickel having a particle diameter of 1 to 25 nm, in which bond energies between the metallic nickel and the compound comprising at least nickel and aluminum in the catalyst are 874.5 to 871.5 eV (Ni 2p_{1/2}), 857 to 853 eV (Ni 2p_{3/2}) and 73.5 to 70 eV (Al 2p), and an activation energy of the catalyst is 4 x 10⁴ to 5 x 10⁴ J/mol (Invention 1).

Also, according to the present invention, there is provided the catalyst for decomposing hydrocarbons as described in the above Invention 1, wherein a nickel content in the catalyst is 5 to 30% by weight in terms of the metal element, a content of the metallic nickel in the catalyst is 40 to 75% by weight based on the nickel content, and an aluminum content in the catalyst is 15 to 45% by weight in terms of the metal element (Invention 2).

Also, according to the present invention, there is provided the catalyst for decomposing hydrocarbons as described in the above Invention 1 or 2, further comprising at least one element selected from the group consisting of an alkali metal element, an alkali earth metal element, a rare earth element and a noble metal element (Invention 3).

In addition, according to the present invention, there is provided a process for producing the catalyst for decomposing hydrocarbons as described in any one of the above Inventions 1 to 3, comprising:
a step of producing the compound comprising nickel and aluminum;
a step of forming a molded body as a catalyst precursor comprising the compound;
a first heat treatment step of conducting decarbonization of an organic binder, removal of water from the catalyst precursor and sintering of the catalyst precursor; and
a second heat treatment step of subjecting the resulting catalyst to reducing treatment to metallize the catalytic metal elements therein,
said first heat treatment step further comprising a decarbonization/dehydration step (1) and a sintering step (2), in which a target temperature to be finally reached in the sintering step (2) is set to 920 to 1250°C, a target temperature to be finally reached in the second heat treatment step is set to 600 to 900°C, and a retention time at the target temperature to be finally reached in the second heat treatment step is 1 to 10 hr (Invention 4).

Further, according to the present invention, there is provided a fuel cell system comprising the catalyst for decomposing hydrocarbons as described in any one of the above Inventions 1 to 3 (Invention 5).

### EFFECT OF THE INVENTION

In the catalyst according to the present invention, by controlling a ratio between a metallic state and a compound state of nickel therein, the activation energy of the catalyst can be lowered, so that the catalyst can exhibit an excellent catalytic activity.

Also, in the catalyst according to the present invention, the condition of a nickel compound incorporated therein as a carrier component is optimized, and there is established a strong correlation of electron transfer between the carrier component and the nickel. As a result, the obtained catalyst is enhanced in catalytic activity for a reforming reaction of hydrocarbon raw materials as a high carbon (C) content component, and has an excellent anti-coking property.

Also, the catalyst according to the present invention which has a correlation of bonding between the carrier component and the nickel can prevent the metallic nickel from suffering from sintering during the reforming reaction, and as a result, can exhibit an excellent catalytic activity for a long period of time.

The catalyst according to the present invention comprises metallic nickel in the form of very fine particles. For this reason, the catalyst has an increased contact area with steam, and therefore can exhibit an excellent catalytic activity.

In addition, the catalyst according to the present invention comprises metallic nickel in the form of very fine particles and therefore has a very large number of active sites, and as a result, exhibits a high anti-sulfur poisoning property.

### PREFERRED EMBODIMENTS FOR CARRYING OUT THE INVENTION

The catalyst according to the present invention comprises a compound comprising at least nickel and aluminum, and metallic nickel. The compound comprising nickel and aluminum is a composite oxide, and preferably in the form of a compound having a spinel type crystal structure.

The catalyst according to the present invention comprises metallic nickel having a particle diameter of 1 to 25 nm. It may be difficult to obtain metallic nickel having a particle diameter of less than 1 nm. When the particle diameter of the metallic nickel is more than 25 nm, the resulting catalyst tends to be deteriorated in initial catalytic activity and simultaneously tends to exhibit a poor anti-coking property. The particle diameter of the metallic nickel is preferably 1 to 22 nm and more preferably 2 to 20 nm.

In the catalyst according to the present invention, the bond energies between the metallic nickel and the compound comprising nickel and aluminum are 874.5 to 871.5 eV (Ni 2p_{1/2}), 857 to 853 eV (Ni 2p_{3/2}) and 73.5 to 70 eV (Al 2p). It is not possible to produce the catalyst having bond energies respectively exceeding the maximum values of the above ranges. When the bond energies are respectively less than the minimum values of the above ranges, the resulting catalyst tends to be considerably deteriorated in anti-coking property. The bond energies between the metallic nickel and the compound comprising nickel and aluminum (Ni 2p_{1/2}; Ni 2p_{3/2}; Al 2p) are preferably 874.5 to 872 eV, 857 to 854 eV and 73 to 70 eV, respectively, and more preferably 874 to 872 eV, 856.5 to 854 eV and 73 to 70.5 eV, respectively.

The catalyst according to the present invention has an activation energy of 4 x 10⁴ to 5 x 10⁴ J/mol. It is not possible to produce the catalyst having an activation energy of less than 4 x 10⁴ J/mol. When the activation energy is more than 5 x 10⁴ J/mol, the resulting catalyst tends to exhibit a poor reactivity and therefore tends to be deteriorated in reforming reactivity of hydrocarbon raw materials as a high carbon (C) content component as well as anti-coking property. The activation energy of the catalyst is preferably 4.0 x 10⁴ to 4.8 x 10⁴ J/mol, and more preferably 4.0 x 10⁴ to 4.6 x 10⁴ J/mol.

In addition, the catalyst according to the present invention preferably has a nickel content of 5 to 30% by weight in terms of a nickel metal element. When the nickel content in the catalyst is less than 5% by weight, the resulting catalyst tends to be deteriorated in initial catalytic activity. On the other hand, when the nickel content in the catalyst is more than 30% by weight, it may be difficult to obtain a catalyst comprising the metallic nickel whose particle diameter lies within the above-specified range. The nickel content in the catalyst is more preferably 7 to 25% by weight and still more preferably 9 to 23% by weight.

The content of nickel in the form of metallic nickel in the catalyst is preferably 40 to 75% by weight based on the above nickel content. When the metallic nickel content in the catalyst is less than 40% by weight, the resulting catalyst tends to be considerably deteriorated in initial catalytic activity. On the other hand, when the metallic nickel content in the catalyst is more than 75% by weight, it may be difficult to obtain a catalyst comprising the metallic nickel whose particle diameter lies within the above-specified range. The metallic nickel content in the catalyst is more preferably 42 to 74% by weight and still more preferably 45 to 73% by weight based on the nickel content.

Also, the aluminum content in the catalyst according to the present invention is preferably 15 to 45% by weight in terms of an aluminum metal element. When the aluminum content in the catalyst is less than 15% by weight, the resulting catalyst tends to be considerably deteriorated in initial catalytic activity. On the other hand, when the aluminum content in the catalyst is more than 45% by weight, the metallic nickel content based on the nickel content in the catalyst tends to become less than 40% by weight, so that the resulting catalyst tends to be considerably deteriorated in initial catalytic activity. The aluminum content in the catalyst is more preferably 17 to 44% by weight and still more preferably 18 to 43% by weight.

The catalyst according to the present invention may comprise at least one element selected from the group consisting of an alkali metal element, an alkali earth metal element, a rare earth element and a noble metal element. Examples of the alkali metal element include sodium and potassium. Examples of the alkali earth metal element include magnesium, calcium, strontium and barium. Examples of the rare earth element include 3B Group elements and lanthanoid series elements such as scandium, yttrium, lanthanum, cerium, praseodymium, neodymium, samarium, europium and gadolinium. Examples of the noble metal element include platinum, gold, iridium, palladium, silver, indium, rhenium, ruthenium and rhodium.

The combination and amounts of these elements used in the catalyst are not particularly limited, and may be appropriately selected, in particular, in view of a performance of the catalyst according to its applications. For example, the alkali metal content in the catalyst is 0.5 to 10% by weight, the alkali earth metal content in the catalyst is 0.5 to 35% by weight, the rare earth element content in the catalyst is 0.5 to 10% by weight, and the noble metal content in the catalyst is 0.05 to 5% by weight.

The catalyst according to the present invention may be in the form of any of a compound comprising nickel, aluminum and an alkali earth metal element; a compound comprising nickel, aluminum and a rare earth element; a compound comprising nickel, aluminum and a noble metal element; a compound comprising nickel, aluminum, an alkali earth metal element and a rare earth element; a compound comprising nickel, aluminum, an alkali earth metal element and a noble metal element; a compound comprising nickel, aluminum, a rare earth element and a noble metal content; a compound comprising nickel, aluminum, an alkali earth metal element, a rare earth element and a noble metal content; and a compound comprising nickel, aluminum, an alkali metal element, an alkali earth metal element, a rare earth element and a noble metal element.

The noble metal element contained in the catalyst may be in a metallic state, and present in the form of an alloy with nickel or on the surface of the nickel particles. The configuration of the noble metal element in the catalyst may be confirmed using an X-ray absorption fine structure (XAFS).

Next, the process for producing the catalyst according to the present invention is described.

The catalyst according to the present invention is produced via a step of producing a compound comprising nickel and aluminum; a step of forming a molded body as a catalyst precursor comprising the compound; a first heat treatment step of conducting decarbonization of an organic binder, removal of water from the catalyst precursor and sintering of the catalyst precursor; and a second heat treatment step of subjecting the resulting catalyst to reducing treatment to metallize the catalytic metal element therein.

The above compound comprising nickel and aluminum may be produced by a wet reaction. In the wet reaction, it is industrially optimum to use a method in which the compound is produced by reacting a metal raw material such as a nitrate, a chloride, a sulfate and a hydroxide of a metal with an alkaline compound. In the step of producing the compound, an alkali metal element, an alkali earth metal element, a rare earth element and a noble metal element may be added to the reaction system. The reaction product is obtained in the form of a catalyst precursor. The obtained precipitate is taken out by centrifugal separation or filtration, and subjected to drying or pulverization, if required.

The catalyst precursor as the precipitate obtained by the wet reaction in the form of a cake-like paste or a powder is mixed with an organic binder or an inorganic binder, or with a solvent, and the resulting mixture is subjected to molding step. Examples of the preferred inorganic binder include alumina, zirconia, silica, titania, magnesia, calcia and a rate earth element compound. Examples of the organic binder include polyvinyl alcohol, an acrylic resin, a cellulose resin, an ethyl cellulose resin, an epoxy resin, an amino resin, a polyamide resin, an alkyd resin, a maleic acid resin, a silicone resin, a fluororesin, a urethane resin, a phenol resin or the like. Examples of the solvent include various solvents, e.g., water, alcohols such as methanol, ethanol, isopropanol and propanol, and glycols such as glycerin, ethylene glycol, propylene glycol and diethylene glycol.

The method of molding the catalyst precursor as used in the present invention may be carried out using various apparatuses and various manners, e.g., using a rolling granulator, a pan granulator, an extrusion molding machine or a tableting machine, or by coating and supporting the catalyst precursor on a molded body or by supporting the catalyst precursor on an alumina fiber. After the molding, the resulting molded body may be subjected to removal of the solvent or water using a dryer, if required.

The shape of the catalyst molded body according to the present invention is not particularly limited, and may be any shape generally used for catalysts. Examples of the shape of the catalyst molded body include a spherical shape, a cylindrical shape, a hollow cylindrical shape, a pellet shape or the like.

The catalyst molded body according to the present invention, when it has a spherical shape, usually has a size of 1 to 10 mmφ and preferably 2 to 8 mmφ.

It is required that the catalyst molded body obtained by the above molding method is subjected to two treatments comprising the first heat treatment step including decarbonization of the organic solvent, removal of water from the catalyst precursor and sintering of the catalyst precursor to enhance a strength of the molded body; and the second heat treatment step including metallization of the catalytic metal element by subjecting the catalyst to reducing treatment. These treatments may be separately carried out using individual apparatuses or may be continuously carried out using a single apparatus.

First, the first heat treatment step is described. The first heat treatment step further comprises two steps including a decarbonization/dehydration step (1) and a sintering step (2).

In any of the steps in the first heat treatment step, it is necessarily required to flow a gas such as air and oxygen upon the heat treatment. If no gas flows, a vapor of the organic binder or water vapor tends to be filled in the heat treatment furnace, so that the decarbonization and removal of water tend to hardly proceed.

The amount of the gas flowing during the first heat treatment step is preferably controlled such that a product of an amount of the catalyst per 1 m³ of a capacity of the heat treatment furnace and the amount of the flowing gas lies within the range of 1 to 5000 (kg·L/min)/m³. When the amount of the gas flowing during the first heat treatment step is less than 1 (kg·L/min)/m³, the production rate per unit time tends to be low, and therefore such a small flowing gas amount tends to be unsuitable for production of the catalyst. When the amount of the gas flowing during the first heat treatment step is more than 5000 (kg·L/min)/m³, a vapor of the organic binder or water vapor tends to be filled in the heat treatment furnace, so that the decarbonization and removal of water tend to hardly proceed. The amount of the gas flowing during the first heat treatment step is more preferably controlled such that the product of an amount of the catalyst per 1 m³ of a capacity of the heat treatment furnace and the amount of the flowing gas lies within the range of 5 to 4000 (kg·L/min)/m³. The steps (1) and (2) may be conducted either in respective separate apparatuses or in a single apparatus.

First, the decarbonization/dehydration step (1) is described.

The temperature rise rate upon the heat treatment is preferably 0.2 to 2.0°C/min. When the temperature rise rate upon the heat treatment is less than 0.2°C/min, the production rate per unit time tends to be low, and therefore such a temperature rise rate tends to be unsuitable for production of the catalyst. When the temperature rise rate upon the heat treatment is more than 2.0°C/min, the amount of the vapor of the organic binder component or water vapor generated per unit time tends to be excessively increased, so that the gas used in the heat treatment tends to be well replaced with a dried gas, thereby failing to obtain a good strength of the catalyst molded body. In addition, in such a case, the organic binder or deposited carbon tends to is explosively reacted so that the catalyst molded body tends to be ruptured or broken. The temperature rise rate upon the heat treatment is more preferably 0.3 to 1.8°C/min, and still more preferably 0.5 to 1.5°C/min.

In the present invention, the heating may be conducted in multiple stages, and the catalyst molded body may be held at a predetermined temperature for 0.5 to 12 hr until finally reaching the target temperature. The frequency of the holding procedure is not particularly limited. By holding the catalyst molded body at the predetermined temperature, it is possible to suppress excessive generation of the vapor of the organic binder component or water vapor and surely remove the vapor of the organic binder component or water vapor. As a result, it is possible to suppress rupture or breakage of the catalyst molded body and deterioration in strength of the catalyst molded body. The predetermined holding temperature may be appropriately determined according to the kind and amount of solvent or organic binder and the water content in the catalyst molded body. When the holding time at the predetermined temperature is shorter than 0.5 hr, removal of the vapor of the organic binder component or water vapor tends to be insufficient. When the holding time at the predetermined temperature is longer than 12 hr, the production rate per unit time tends to be low, and therefore such a holding time tends to be unsuitable for production of the catalyst. For example, the predetermined temperature and the holding time may be determined using a thermogravimetry/differential thermal analysis device (TG-DTA).

Next, the sintering step (2) is described.

The sintering step is an important work for determining a ratio between a metallic state and a compound state of nickel contained in the catalyst. The target temperature to be finally reached in the sintering step is preferably set to the range of 920 to 1250°C. When the target temperature is lower than 920°C, it is not possible to obtain the aimed catalyst of the present invention, and the resulting molded body tends to be deteriorated in strength. When the target temperature is higher than 1250°C, the bonding between nickel and the carrier component tends to be excessively strong, so that the activation energy of the catalyst tends to be increased and the catalyst performance tends to be deteriorated. The holding time for reaching the target temperature in the sintering step is preferably 2 to 12 hr, When the holding time is shorter than 2 hr, the sintering tends to hardly proceed, so that the resulting molded body tends to be deteriorated in strength. When the holding time is longer than 12 hr, the sintering reaction tends to be almost completed, and therefore such a prolonged holding time tends to be unpractical in view of a productivity. The velocity for reaching the target temperature is more preferably 2.5 to 10 h.

In any of the steps (1) and (2), the cooling rate after completion of the sintering when using a batch-type heat treatment device is preferably 1 to 50°C/min. When the cooling rate is less than 1°C/min, the production rate per unit time tends to be low, and therefore such a cooling rate tends to be unsuitable for production of the catalyst. The cooling rate of more than 50°C/min tends to be unobtainable by the batch-type heat treatment device. The cooling rate after completion of the sintering when using a batch-type heat treatment device is more preferably 2 to 35°C/min. Also, the cooling rate after completion of the sintering when using a continuous-type heat treatment device is preferably 5 to 100°C/min. When the cooling rate is less than 5°C/min, no merit by the use of the continuous-type heat treatment device tends to be obtained. The cooling rate of more than 100°C/min tends to be unobtainable by the continuous-type heat treatment device. The cooling rate after completion of the sintering when using a continuous-type heat treatment device is more preferably 10 to 80°C/min. The continuous-type heat treatment device has a merit of rapidly cooling the catalyst molded body. On the other hand, the batch-type heat treatment device has a merit of suppressing investment in facilities as compared to the continuous-type heat treatment device. The cooling temperature may vary depending upon the subsequent second heat treatment step. When the reduction treatment is successively conducted in the second heat treatment step, the optimum cooling temperature is near the reduction treatment temperature. In the batch-type heat treatment device, it is required that the resulting molded body is cooled to near room temperature and is transferred to the subsequent second heat treatment device.

Next, the second heat treatment step is described. The second heat treatment step is an important work for determining a ratio between a metallic state and a compound state of nickel contained in the catalyst.

First, the inside atmosphere of the heat treatment furnace is purged with a nitrogen gas. At this time, the heat treatment furnace may be subjected to vacuum evacuation before introducing nitrogen thereinto. In addition, the vacuum evacuation and the purge with nitrogen may be repeated several times. Thereafter, a nitrogen gas may be allowed to flow through the heat treatment furnace until reaching a predetermined temperature, or a gas having a desired hydrogen gas concentration may be allowed to flow therethrough. The hydrogen gas may have a hydrogen concentration of 100 vol%, or the hydrogen gas diluted with nitrogen or argon may be introduced into the heat treatment furnace.

The amount of the hydrogen gas flowing upon the second heat treatment step is preferably controlled such that a product of an amount of the catalyst per 1 m³ of a capacity of the heat treatment furnace and the amount of the flowing gas lies within the range of 1 to 15000 (kg·L/min)/m³. When the amount of the hydrogen gas flowing upon the second heat treatment step is less than 1 (kg·L/min)/m³, the production rate per unit time tends to be low, and therefore such an amount of the hydrogen gas flowing tends to be unsuitable for production of the catalyst. When the amount of the hydrogen gas flowing upon the second heat treatment step is more than 15000 (kg·L/min)/m³, an excessively large amount of the hydrogen gas that no longer contributes to the reduction reaction tends to be generated, so that the production costs tend to be increased, which is disadvantageous in view of productivity. In addition, when the amount of the catalyst used is excessively large, it may be difficult to obtain the aimed catalyst of the present invention. The amount of the hydrogen gas flowing upon the second heat treatment step is more preferably controlled such that a product of an amount of the catalyst per 1 m³ of a capacity of the heat treatment furnace and the amount of the flowing gas lies within the range of 10 to 12500 (kg·L/min)/m³, and still more preferably 15 to 12500 (kg·L/min)/m³.

The temperature rise rate of the second heat treatment step is preferably 1 to 15°C/min. When the temperature rise rate of the second heat treatment step is less than 1°C/min, it may be difficult to obtain a good productivity. When the temperature rise rate of the second heat treatment step is more than 15°C/min, it may be difficult to efficiently discharge a water vapor generated during the reduction treatment, so that metallic nickel particles tend to become too coarse. The temperature rise rate of the second heat treatment step is more preferably 1 to 12°C/min, and still more preferably 1 to 10°C/min.

The target temperature to be finally reached in the second heat treatment step is preferably set to the range of 600 to 900°C. When the target temperature is lower than 600°C, nickel tends to be hardly converted into a metallic state. When the target temperature is higher than 900°C, the content of metallic nickel in the nickel component contained in the catalyst tends to be increased, and the bond energies between nickel and the carrier component tend to lowered, so that the resulting catalyst tends to be deteriorated in anti-coking property. The target velocity to be finally reached in the second heat treatment step is more preferably 620 to 890°C, and still more preferably 650 to 880°C. The holding time at the target temperature set is preferably 1 to 10 hr. When the holding time is shorter than 1 hr or longer than 10 hr, it may be difficult to obtain the aimed catalyst of the present invention. The holding time at the target temperature set is more preferably 1.5 to 8 hr.

The cooling temperature is not particularly limited, and may vary depending upon design of the apparatus used in the second heat treatment step. However, it is required that the resulting catalyst is taken out in atmospheric air after cooled down below 200°C. When the catalyst is taken out at a temperature higher than 200°C, metallic nickel tends to be oxidized into nickel (II) oxide.

Next, the process for producing a mixed reformed gas comprising hydrogen from hydrocarbons according to the present invention is described.

When using the catalyst according to the present invention, it is possible to generate hydrogen from a hydrocarbon raw material. Examples of the hydrocarbon raw material include carbon monoxide, carbon dioxide, methane, ethane, propane, butane, 2-methyl butane, 2,2-dimethyl propane, n-hexane, cyclohexane, kerosine, naphtha, paraffin, lump oils and petroleum. As the reaction for producing hydrogen, there may be used any reaction selected from dry-reforming, steam-reforming, a partial oxidation reaction, an autothermal reaction, a water gas shift reaction, or the like. When using the catalyst in fuel cell systems, as the hydrocarbon raw material, there may be used LPG and kerosene. Examples of the reaction suitably used in the fuel cell systems include steam-reforming, a partial oxidation reaction and an autothermal reaction. The reaction conditions may vary depending upon optimum use conditions used in the respective systems. For example, the suitable reaction conditions include S/C = 2 to 3.5; GHSV_{dry} = 100 to 5,000 h⁻¹; and a reaction temperature = 350 to 900°C.

### <Function>

The reason why the catalyst according to the present invention can exhibit a high reforming reactivity for high carbon (C) content hydrocarbon raw materials, and is excellent in catalytic activity and anti-coking property, is considered by the present inventor as follows.

It is suggested by the present inventors that the ratio between a metallic state and a compound state of nickel in the catalyst is controlled by adjusting conditions of the first heat treatment step (decarbonization, dehydration and sintering) and the second heat treatment step (reducing treatment), so that the activation energy of the catalyst is reduced, and therefore the catalyst according to the present invention can exhibit an excellent catalytic activity.

In addition, it is suggested by the present inventors that a strong correlation of electron transfer between the carrier component and nickel is established by adjusting conditions of the first heat treatment step (decarbonization, dehydration and sintering) and the second heat treatment step (reducing treatment), so that the reforming reactivity of high carbon (C) content hydrocarbon raw materials is enhanced, and therefore the catalyst according to the present invention can exhibit an excellent anti-coking property.

Further, it is suggested by the present inventors that the bonding correlation between the carrier component and nickel in the catalyst is well established, so that sintering of nickel in the reforming reaction can be prevented, and therefore the catalyst according to the present invention can exhibit an excellent catalytic activity for a long period of time.

The catalyst according to the present invention has an excellent catalytic activity because metallic nickel is present therein in the form of very fine particles so as to increase a contact area with steam.

Furthermore, the catalyst according to the present invention has a very large number of active sites because metallic nickel is present therein in the form of very fine particles, and therefore is excellent in anti-sulfur poisoning property.

### EXAMPLES

The present invention is described in more detail with respect to typical Examples. However, these Examples are only illustrative and therefore not intended to limit the invention thereto. The evaluation methods used in Examples and Comparative Examples are as follows.

The particle diameter of metallic nickel was measured using a transmission electron microscope "JEM-1200EXII" manufactured by Nippon Denshi Co., Ltd.

The content of each of nickel, aluminum, an alkali metal element, an alkali earth metal element, a rare earth metal element and a noble metal element was determined as follows. That is, a sample was dissolved in an acid, and the resulting solution was analyzed by a plasma emission spectroscopic device ("SPS-4000" manufactured by Seiko Denshi Kogyo Co., Ltd.).

The bond energies between metallic nickel and the compound comprising nickel and aluminum and the activation energy of the catalyst were measured by XPS (X-ray photoelectric spectrophotometry).

Typical examples of the present invention are described below.

### Example 1:

### <Production of Catalyst Precursor>

MgSO₄·7H₂O, Al₂(SO₄)₃·8H₂O and NiSO₄·6H₂O were weighed in amounts of 2695.0 g, 1063.6 g and 574.9 g, respectively, and dissolved in pure water to prepare 12000 mL of a mixed solution thereof. Separately, 8563 mL of an NaOH solution (concentration: 14 mol/L) were mixed with a solution in which 324.6 g of Na₂CO₃ were dissolved, to prepare 25000 mL of an alkali mixed solution. Then, the thus prepared alkali mixed solution was mixed with the above mixed solution comprising the magnesium salt, aluminum salt and nickel salt, and the resulting solution was aged at 95°C for 8 hr and then subjected to separation by filtration, drying and then pulverization, thereby obtaining catalyst precursor particles.

### <Production of Molded Body>

Next, 1323.4 g of the thus obtained catalyst precursor particles were mixed with 72.78 g of boehmite, 151.5 g of PVA, 277.9 g of water and 860.2 g of propylene glycol, and the resulting mixture was kneaded using a screw kneader for 3 hr. The thus obtained clayey kneaded material was formed into a spherical shape by a compression molding method, and the resulting spherical molded product was dried at 105°C for 24 hr, thereby obtaining a catalyst precursor molded body.

### <First Heat Treatment Step: Decarbonization and Dehydration Step, and Sintering Step>

The thus obtained catalyst precursor molded body was charged into a batch-type atmosphere calcination furnace, and while flowing air through the furnace in such an amount that a product of an amount of the catalyst per 1 m³ of a capacity of the furnace and the amount of the flowing gas was 666 (kg·L/min)/m³, the catalyst precursor molded body was heated to 1125°C at a rate of 1°C/min and then held at that temperature for 4 hr. During the heating, the molded body was held for 1 hr at a temperature of each of 200°C, 300°C and 400°C to accelerate decarbonization and dehydration thereof. Thereafter, the molded body was cooled at a rate of 3°C/min, and was taken out from the furnace when cooled down below 100°C.

### <Second Heat Treatment Step>

The thus calcined molded body was charged into a fixed bed-type reducing furnace, and while flowing a 100% hydrogen gas through the furnace in such an amount that a product of an amount of the catalyst per 1 m³ of a capacity of the furnace and the amount of the flowing gas was 12000 (kg·L/min)/m³, the molded body was heated to 770°C at a rate of 3°C/min and then held at that temperature for 6 hr. Thereafter, the molded body was cooled in the furnace to a temperature not higher than 50°C in a nitrogen atmosphere to prevent oxidation of metallic nickel, and the molded product (catalyst) was taken out from the furnace. The resulting catalyst had a nickel content of 14.988% by weight (of which a metallic nickel content was 74.2% by weight), and an aluminum content of 17.752% by weight. The particle diameter of metallic nickel in the catalyst was 9.8 nm, and the bond energies between the metallic nickel and the compound of aluminum comprising nickel (Ni 2p_{1/2}; Ni 2p_{3/2}; Al 2p) in the catalyst were 872.1 eV, 853.2 eV and 70.5 eV, respectively, and the activation energy of the catalyst was 4.1 x 10⁴ J/mol.

### <Reaction Using Catalyst>

The performance of the obtained catalyst was evaluated as follows. That is, 10 to 50 g of the catalyst were filled in a stainless steel reaction tube of a single tube fixed-bed flowing type having a diameter of 20 mm and a capacity of 100 cc to prepare a catalyst tube. A raw material gas and steam were flowed through the catalyst tube (reactor) to evaluate a performance of the catalyst. The gases generated after the reforming reaction were analyzed using a gas chromatograph.

The DSS operation was performed by adopting the following start-up method, stationary operation and shut-down method.

Start-up method: Heating was initiated from room temperature, and flowing of steam through the reaction tube was initiated at 250°C, whereas flowing of a city gas (13A) therethrough was initiated at 350°C.

Stationary operation: Held at 700°C for 1 hr (the evaluation for a performance of the catalyst was conducted).

Shut-down method: While flowing steam and a city gas (13A), the temperature was dropped to 300°C at which flowing of the steam and the city gas (13A) through the reaction tube was stopped. Then, after the temperature was dropped below 100°C, a reformed gas remaining inside of the reaction tube was removed by flowing a city gas (13A) therethrough.

Since C₂ or more hydrocarbons were decomposed into methane, CO, CO₂ and H₂, the catalyst performance was evaluated using a Cₙ conversion rate (conversion rate of whole hydrocarbons). Also, when using a city gas (13A) as the raw material gas, the conversion rate of the C₂ or more hydrocarbons (including ethane, propane, butane and pentane, etc.) in the raw material gas was calculated as a conversion rate of the city gas (13A).

### Example) In the case where propane was used as the raw material gas:

Conversion Rate of Propane = 100 x (CO + CO₂ + CH₄ + C₂H₆)/CO + CO₂ + CH₄ + C₂H₆ + C₃H₈)

Cₙ Conversion Rate (Conversion Rate of Whole Hydrocarbons) = (CO + CO₂)/(CO + CO₂ + CH₄ + C₂H₆ + C₃H₈)

In Table 1, there are shown the results of analysis of bond energies, activation energy and the like. In Table 2, there is shown the relationship between a reaction time, a propane conversion rate and unreacted propane when the reaction was conducted using propane as the raw material gas under the conditions including GHSV of 3000 h⁻¹, a reaction temperature of 300 to 700°C and a molar ratio of steam to carbon (S/C) of 3.0. In Table 3, there is shown a relationship between an influence of DSS operation on a hydrocarbon conversion rate and an amount of carbon deposited when the DSS operation was performed using a city gas (13A) as the raw material gas.

### Example 2

### <Production of Catalyst Precursor>

Mg (NO₃)₂·6H₂O, Al₂(NO₃)₃·9H₂O and Ni (NO₃)₂·6H₂O were weighed in amounts of 2247.1 g, 1429.3 g and 1662.0 g, respectively, and dissolved in pure water to prepare 15000 mL of a mixed solution thereof. Separately, 4916 mL of an NaOH solution (concentration: 14 mol/L) were mixed with a solution in which 565.5 g of Na₂CO₃ were dissolved, to prepare 20000 mL of an alkali mixed solution. Then, the thus prepared alkali mixed solution was mixed with the above mixed solution comprising the magnesium salt, aluminum salt and nickel salt, and the resulting solution was aged at 80°C for 6 hr and then subjected to separation by filtration, drying and then pulverization, thereby obtaining catalyst precursor particles.

### <Production of Molded Body>

Next, 1671.3 g of the thus obtained catalyst precursor particles were mixed with 83.56 g of γ-Al₂O₃, 157.9 g of ethyl cellulose, 501.4 g of water and 835.6 g of ethylene glycol, and the resulting mixture was kneaded using a screw kneader for 5 hr. The thus obtained clayey kneaded material was formed into a cylindrical shape by a extrusion molding machine, and the resulting cylindrical molded product was dried at 115°C for 24 hr, thereby obtaining a catalyst precursor molded body.

### <First Heat Treatment Step: Decarbonization and Dehydration Step, and Sintering Step>

The thus obtained catalyst precursor molded body was charged into a batch-type atmosphere calcination furnace, and while flowing air through the furnace in such an amount that a product of an amount of the catalyst per 1 m³ of a capacity of the furnace and the amount of the flowing gas was 16.7 (kg·L/min)/m³, the catalyst precursor molded body was heated to 1220°C at a rate of 1°C/min and then held at that temperature for 2 hr. During the heating, the molded body was held for 2 hr at a temperature of each of 250°C and 350°C to accelerate decarbonization and dehydration thereof. Thereafter, the molded body was cooled at a rate of 48°C/min, and was taken out from the furnace when cooled down below 100°C.

### <Second Heat Treatment Step>

The thus calcined molded body was charged into a fixed bed-type reducing furnace, and while flowing a 10% hydrogen gas (diluted with nitrogen) through the furnace in such an amount that a product of an amount of the catalyst per 1 m³ of a capacity of the furnace and the amount of the flowing gas was 33.3 (kg·L/min)/m³, the molded body was heated to 880°C at a rate of 14°C/min and then held at that temperature for 1 hr. Thereafter, the molded body was cooled in the furnace to a temperature not higher than 50°C in a nitrogen atmosphere to prevent oxidation of metallic nickel, and the molded product (catalyst) was taken out from the furnace. The resulting catalyst had a nickel content of 28.897% by weight of which a metallic nickel content was 43.6% by weight, and an aluminum content of 21.520% by weight. The particle diameter of metallic nickel in the catalyst was 24.1 nm, and the bond energies between the metallic nickel and the compound of aluminum comprising nickel in the catalyst were 874.4 eV, 856.9 eV and 73.4 eV, respectively, and the activation energy of the catalyst was 4.2 x 10⁴ J/mol.

### Example 3

### <Production of Catalyst Precursor>

Ca(NO₃)₂, Al₂(SO₄)₃·8H₂O and NiSO₄·6H₂O were weighed in amounts of 1827.7 g, 1230.7 g and 1064.5 g, respectively, and dissolved in pure water to prepare 20000 mL of a mixed solution thereof. Separately, 4219 mL of an NaOH solution (concentration: 14 mol/L) were mixed with a solution in which 375.6 g of Na₂CO₃ were dissolved, to prepare 25000 mL of an alkali mixed solution. Then, the thus prepared alkali mixed solution was mixed with the above mixed solution comprising the calcium salt, aluminum salt and nickel salt, and the resulting solution was aged at 85°C for 12 hr and then subjected to separation by filtration, drying and then pulverization, thereby obtaining catalyst precursor particles.

### <Production of Molded Body>

Next, 1531.4 g of the thus obtained catalyst precursor particles were mixed with 581.9 g of kaolinite, 144.7 g of PVA, 76.57 g of water and 1255.7 g of glycerin, and the resulting mixture was kneaded using a screw kneader for 2 hr. The thus obtained clayey kneaded material was formed into a spherical shape by a tableting machine, and the resulting spherical molded product was dried at 150°C for 12 hr, thereby obtaining a catalyst precursor molded body.

### <First Heat Treatment Step: Decarbonization and Dehydration Step, and Sintering Step>

The thus obtained catalyst precursor molded body was charged into a batch-type atmosphere calcination furnace, and while flowing air through the furnace in such an amount that a product of an amount of the catalyst per 1 m³ of a capacity of the furnace and the amount of the flowing gas was 4800 (kg·L/min)/m³, the catalyst precursor molded body was heated to 950°C at a rate of 1°C/min and then held at that temperature for 12 hr. During the heating, the molded body was held for 1 hr at a temperature of each of 300°C and 400°C to accelerate decarbonization and dehydration thereof. Thereafter, the molded body was cooled at a rate of 15°C/min, and was taken out from the furnace when cooled down below 100°C.

### <Second Heat Treatment Step>

The thus calcined molded body was charged into a fixed bed-type reducing furnace, and while flowing a 30% hydrogen gas (diluted with argon) through the furnace in such an amount that a product of an amount of the catalyst per 1 m³ of a capacity of the furnace and the amount of the flowing gas was 14400 (kg·L/min)/m³, the molded body was heated to 830°C at a rate of 10°C/min and then held at that temperature for 3 hr. Thereafter, the molded body was cooled in the furnace to a temperature not higher than 50°C in a nitrogen atmosphere to prevent oxidation of metallic nickel, and the molded product (catalyst) was taken out from the furnace. The resulting catalyst had a nickel content of 14.660% by weight of which a metallic nickel content was 56.5% by weight, and an aluminum content of 15.927% by weight. The particle diameter of metallic nickel in the catalyst was 15.2 nm, and the bond energies between the metallic nickel and the compound of aluminum comprising nickel in the catalyst were 874.2 eV, 854.2 eV and 72.2 eV, respectively, and the activation energy of the catalyst was 4.3 x 10⁴ J/mol.

### Example 4:

### <Production of Catalyst Precursor>

MgSO₄·7H₂O, Al₂(SO₄)₃·8H₂O, NiSO₄·6H₂O and a Ru nitrate solution (51 g/L) were weighed in amounts of 1462.3 g, 1442.7 g, 467.9 g and 331.7 mL, respectively, and dissolved in pure water to prepare 12000 mL of a mixed solution thereof. Separately, 8124 mL of an NaOH solution (concentration: 14 mol/L) were mixed with a solution in which 440.3 g of Na₂CO₃ were dissolved, to prepare 23000 mL of an alkali mixed solution. Then, the thus prepared alkali mixed solution was mixed with the above mixed solution comprising the magnesium salt, aluminum salt, nickel salt and ruthenium salt, and the resulting solution was aged at 65°C for 10 hr and then subjected to separation by filtration, drying and then pulverization, thereby obtaining catalyst precursor particles.

### <Production of Molded Body>

Next, 1032.2 g of the thus obtained catalyst precursor particles were mixed with 619.3 g of boehmite, 118.2 g of a cellulose resin, 103.2 g of water and 722.6 g of diethylene glycol, and the resulting mixture was kneaded using a screw kneader for 5 hr. The thus obtained clayey kneaded material was formed into a spherical shape by a compression molding method, and the resulting spherical molded product was dried at 125°C for 24 hr, thereby obtaining a catalyst precursor molded body.

### <First Heat Treatment Step: Decarbonization and Dehydration Step, and Sintering Step>

The thus obtained catalyst precursor molded body was charged into a batch-type atmosphere calcination furnace, and while flowing air through the furnace in such an amount that a product of an amount of the catalyst per 1 m³ of a capacity of the furnace and the amount of the flowing gas was 333.3 (kg·L/min)/m³, the catalyst precursor molded body was heated to 1075°C at a rate of 1°C/min and then held at that temperature for 8 hr. During the heating, the molded body was held for 1 hr at a temperature of each of 400°C and 500°C to accelerate decarbonization and dehydration thereof. Thereafter, the molded body was cooled at a rate of 22°C/min, and was taken out from the furnace when cooled down below 100°C.

### <Second Heat Treatment Step>

The thus calcined molded body was charged into a fixed bed-type reducing furnace, and while flowing a 22% hydrogen gas through the furnace in such an amount that a product of an amount of the catalyst per 1 m³ of a capacity of the furnace and the amount of the flowing gas was 8666.7 (kg·L/min)/m³, the molded body was heated to 815°C at a rate of 8°C/min and then held at that temperature for 2 hr. Thereafter, the molded body was cooled in the furnace to a temperature not higher than 50°C in a nitrogen atmosphere to prevent oxidation of metallic nickel, and the molded product (catalyst) was taken out from the furnace. The resulting catalyst had a nickel content of 8.754% by weight of which a metallic nickel content was 56.1% by weight, and an aluminum content of 37.671% by weight. The particle diameter of metallic nickel in the catalyst was 13.4 nm, and the bond energies between the metallic nickel and the compound of aluminum comprising nickel in the catalyst were 872.5 eV, 855.5 eV and 71.2 eV, respectively, and the activation energy of the catalyst was 4.4 x 10⁴ J/mol.

### Example 5:

### <Production of Catalyst Precursor>

Mg(NO₃)₂·6H₂O, Al₂(NO₃)₃·9H₂O, Ni (NO₃)₂·6H₂O and La(NO₃)₂·6H₂O were weighed in amounts of 1398.2 g, 568.2 g, 132.1 g and 118.4 g, respectively, and dissolved in pure water to prepare 9000 mL of a mixed solution thereof. Separately, 2286 mL of an NaOH solution (concentration: 14 mol/L) were mixed with a solution in which 224.7 g of Na₂CO₃ were dissolved, to prepare 11000 mL of an alkali mixed solution. Then, the thus prepared alkali mixed solution was mixed with the above mixed solution comprising the magnesium salt, aluminum salt and nickel salt, and the resulting solution was aged at 125°C for 6 hr and then subjected to separation by filtration, drying and then pulverization, thereby obtaining catalyst precursor particles.

### <Production of Molded Body>

Next, 698.7 g of the thus obtained catalyst precursor particles were mixed with 38.43 g of γ-Al₂O₃, 46.12 g of PVA, 167.7 g of water and 370.4 g of ethylene glycol, and the resulting mixture was kneaded using a screw kneader for 2 hr. The thus obtained clayey kneaded material was formed into a cylindrical shape by a extrusion molding machine, and the resulting cylindrical molded product was dried at 115°C for 18 hr, thereby obtaining a catalyst precursor molded body.

### <First Heat Treatment Step: Decarbonization and Dehydration Step, and Sintering Step>

The thus obtained catalyst precursor molded body was charged into a batch-type atmosphere calcination furnace, and while flowing air through the furnace in such an amount that a product of an amount of the catalyst per 1 m³ of a capacity of the furnace and the amount of the flowing gas was 1666.7 (kg·L/min)/m³, the catalyst precursor molded body was heated to 1180°C at a rate of 1°C/min and then held at that temperature for 5 hr. During the heating, the molded body was held for 1 hr at a temperature of each of 200°C, 300°C, 400°C, 500°C and 600°C to accelerate decarbonization and dehydration thereof. Thereafter, the molded body was cooled at a rate of 8°C/min, and was taken out from the furnace when cooled down below 100°C.

### <Second Heat Treatment Step>

The thus calcined molded body was charged into a fixed bed-type reducing furnace, and while flowing a 100% hydrogen gas through the furnace in such an amount that a product of an amount of the catalyst per 1 m³ of a capacity of the furnace and the amount of the flowing gas was 8333.3 (kg·L/min)/m³, the molded body was heated to 650°C at a rate of 5°C/min and then held at that temperature for 10 hr. Thereafter, the molded body was cooled in the furnace to a temperature not higher than 50°C in a nitrogen atmosphere to prevent oxidation of metallic nickel, and the molded product (catalyst) was taken out from the furnace. The resulting catalyst had a nickel content of 4.957% by weight of which a metallic nickel content was 61.2% by weight, and an aluminum content of 18.969% by weight. The particle diameter of metallic nickel in the catalyst was 2.5 nm, and the bond energies between the metallic nickel and the compound of aluminum comprising nickel in the catalyst were 873.6 eV, 856.6 eV and 70.2 eV, respectively, and the activation energy of the catalyst was 4.4 x 10⁴ J/mol.

### Example 6:

### <First Heat Treatment Step: Decarbonization and Dehydration Step, and Sintering Step>

The catalyst precursor molded body obtained in Example 1 was charged into a batch-type atmosphere calcination furnace, and while flowing air through the furnace in such an amount that a product of an amount of the catalyst per 1 m³ of a capacity of the furnace and the amount of the flowing gas was 2666.7 (kg·L/min)/m³, the catalyst precursor molded body was heated to 1020°C at a rate of 1°C/min and then held at that temperature for 10 hr. During the heating, the molded body was held for 1 hr at a temperature of each of 700°C, 800°C and 900°C to accelerate decarbonization and dehydration thereof. Thereafter, the molded body was cooled at a rate of 8°C/min, and was taken out from the furnace when cooled down below 100°C.

### <Second Heat Treatment Step>

The thus calcined molded body was charged into a fixed bed-type reducing furnace, and while flowing a 85% hydrogen gas through the furnace in such an amount that a product of an amount of the catalyst per 1 m³ of a capacity of the furnace and the amount of the flowing gas was 3666.7 (kg·L/min)/m³, the molded body was heated to 720°C at a rate of 12°C/min and then held at that temperature for 8 hr. Thereafter, the molded body was cooled in the furnace to a temperature not higher than 50°C in a nitrogen atmosphere to prevent oxidation of metallic nickel, and the molded product (catalyst) was taken out from the furnace. The resulting catalyst had a nickel content of 14.988% by weight of which a metallic nickel content was 68.5% by weight, and an aluminum content of 17.752% by weight. The particle diameter of metallic nickel in the catalyst was 7.5 nm, and the bond energies between the metallic nickel and the compound of aluminum comprising nickel in the catalyst were 872.9 eV, 853.7 eV and 73.3 eV, respectively, and the activation energy of the catalyst was 4.1 x 10⁴ J/mol.

### Comparative Example 1:

### <First Heat Treatment Step: Decarbonization and Dehydration Step, and Sintering Step>

The catalyst precursor molded body obtained in Example 1 was charged into a batch-type atmosphere calcination furnace, and heated to 1300°C without flowing any gas therethrough, and then held at that temperature for 5 hr. During the heating, the molded body was not held at any temperature to accelerate decarbonization and dehydration thereof. Thereafter, the molded body was cooled at a rate of 20°C/min, and was taken out from the furnace when cooled down below 100°C. After completion of the first heat treatment step, the molded body was broken into pieces.

### <Second Heat Treatment Step>

The calcined material was charged into a fixed bed-type reducing furnace, and while flowing a 100% hydrogen gas through the furnace in such an amount that a product of an amount of the catalyst per 1 m³ of a capacity of the furnace and the amount of the flowing gas was 12000 (kg·L/min)/m³, the material was heated to 770°C at a rate of 3°C/min and then held at that temperature for 6 hr. Thereafter, the material was cooled in the furnace to a temperature not higher than 50°C in a nitrogen atmosphere to prevent oxidation of metallic nickel, and the molded product (catalyst) was taken out from the furnace. The resulting catalyst had a nickel content of 14.988% by weight of which a metallic nickel content was 6.5% by weight, and an aluminum content of 17.752% by weight. The particle diameter of metallic nickel in the catalyst was 3.2 m, and the bond energies between the metallic nickel and the compound of aluminum comprising nickel in the catalyst were 872.6 eV, 854.8 eV and 70.5 eV, respectively, and the activation energy of the catalyst was 5.8 x 10⁴ J/mol.

### Comparative Example 2:

### <Second Heat Treatment Step>

The catalyst precursor molded body obtained in Example 1 was directly subjected to the second heat treatment step without subjected to the first heat treatment step. Specifically, the catalyst precursor molded body obtained in Example 1 was charged into a fixed bed-type reducing furnace, and while flowing a 100% hydrogen gas through the furnace in such an amount that a product of an amount of the catalyst per 1 m³ of a capacity of the furnace and the amount of the flowing gas was 3.33 (kg·L/min)/m³, the molded body was heated to 950°C at a rate of 1°C/min and then held at that temperature for 10 hr. Thereafter, the molded body was cooled in the furnace to a temperature not higher than 50°C in a nitrogen atmosphere to prevent oxidation of metallic nickel, and the molded product (catalyst) was taken out from the furnace. The resulting catalyst had a nickel content of 14.988% by weight of which a metallic nickel content was 95.6% by weight, and an aluminum content of 17.752% by weight. The particle diameter of metallic nickel in the catalyst was 48.6 m, and the bond energies between the metallic nickel and the compound of aluminum comprising nickel in the catalyst were 865.2 eV, 839.5 eV and 67.2 eV, respectively, and the activation energy of the catalyst was 5.4 x 10⁴ J/mol.

### Comparative Example 3:

An α-alumina powder was formed into 3 mmφ spherical beads and calcined at 1150°C in air for 18 hr. The thus calcined α-alumina beads were sprayed and coated with several split portions of 200 mL of a solution prepared by dissolving 71.25 g of Ni(NO₃)₂·6H₂O in pure water, dried and then calcined again at 660°C in air for 6 hr.

The thus calcined molded body was charged into a fixed bed-type reducing furnace, and while flowing a 100% hydrogen gas through the furnace in such an amount that a product of an amount of the catalyst per 1 m³ of a capacity of the furnace and the amount of the flowing gas was 12000 (kg·L/min)/m³, the molded body was heated to 770°C at a rate of 3°C/min and then held at that temperature for 6 hr. Thereafter, the molded body was cooled in the furnace to a temperature not higher than 50°C in a nitrogen atmosphere to prevent oxidation of metallic nickel, and the molded product (catalyst) was taken out from the furnace. The resulting catalyst had a nickel content of 14.563% by weight of which a metallic nickel content was 99.8% by weight, and an aluminum content of 45.215% by weight. The particle diameter of metallic nickel in the catalyst was 62.2 nm, and the bond energies between the metallic nickel and the compound of aluminum comprising nickel in the catalyst were 842.2 eV, 821.5 eV and 66.8 eV, respectively, and the activation energy of the catalyst was 5.7 x 10⁴ J/mol.

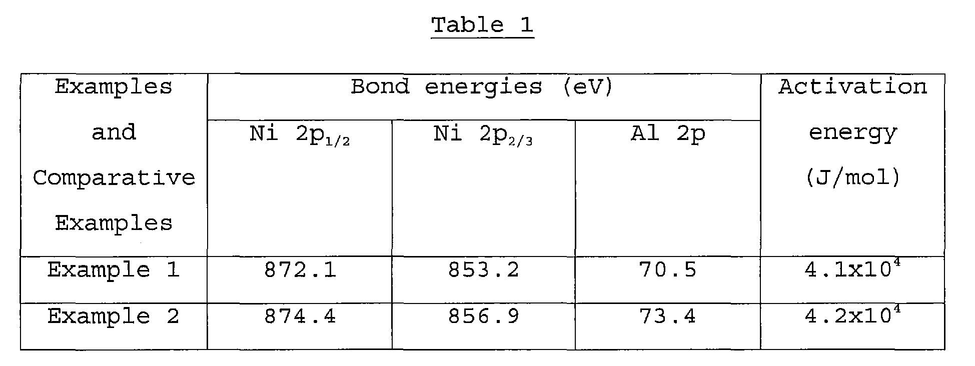

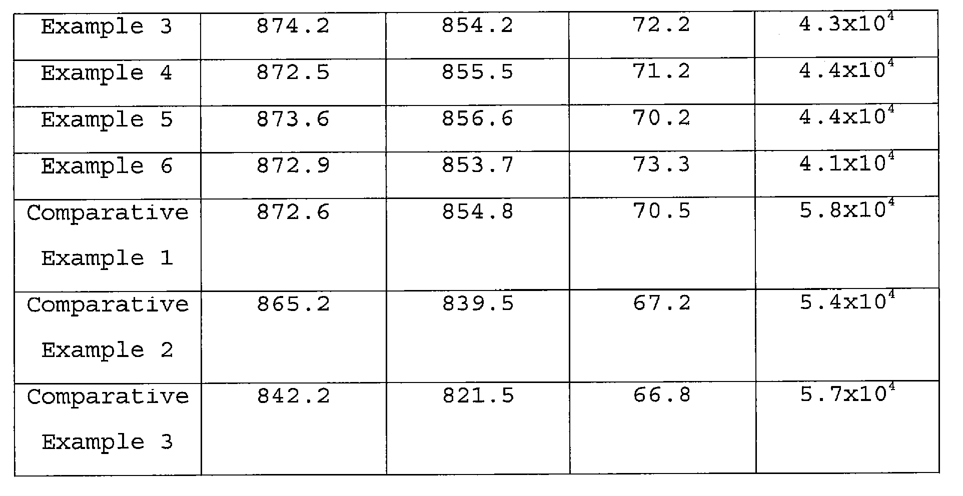

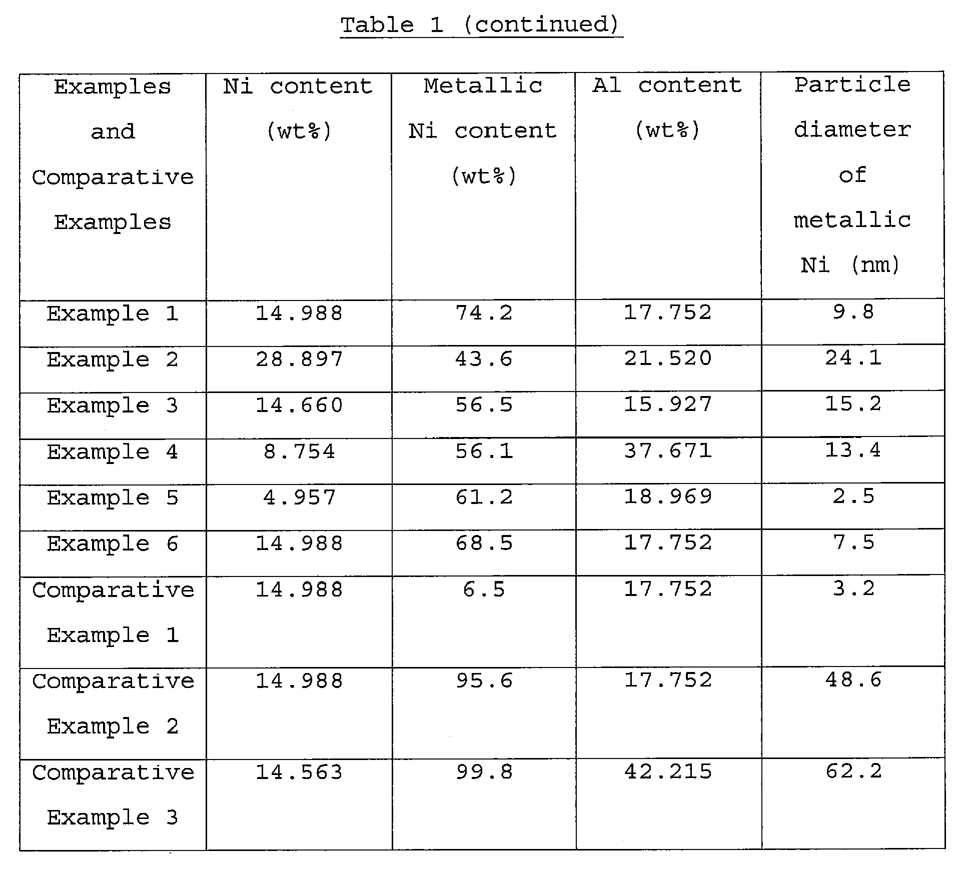

**Table 2**

| Examples | Reaction temperature (°C) | GHSV = 3000 h⁻¹ | | |
|---|---|---|---|---|
| | | Propane conversion rate (%) | Cn conversion rate (%) | Unreacted propane (vol%) |
| Example 1 | 300 | 100 | 20.97 | 0 |
| | 400 | 100 | 31.95 | 0 |
| | 500 | 100 | 53.08 | 0 |
| | 600 | 100 | 82.17 | 0 |
| | 700 | 100 | 97.95 | 0 |
| Example 2 | 300 | 100 | 21.02 | 0 |
| | 400 | 100 | 31.96 | 0 |
| | 500 | 100 | 53.07 | 0 |
| | 600 | 100 | 82.22 | 0 |
| | 700 | 100 | 97.99 | 0 |
| Example 3 | 300 | 100 | 21.01 | 0 |
| | 400 | 100 | 31.96 | 0 |
| | 500 | 100 | 53.1 | 0 |
| | 600 | 100 | 82.21 | 0 |
| | 700 | 100 | 97.98 | 0 |
| Example 4 | 300 | 100 | 20.97 | 0 |
| | 400 | 100 | 31.95 | 0 |
| | 500 | 100 | 53.05 | 0 |
| | 600 | 100 | 82.17 | 0 |
| | 700 | 100 | 97.98 | 0 |
| Example 5 | 300 | 100 | 21.02 | 0 |
| | 400 | 100 | 31.95 | 0 |
| | 500 | 100 | 53.05 | 0 |
| | 600 | 100 | 82.19 | 0 |
| | 700 | 100 | 97.95 | 0 |
| Example 6 | 300 | 100 | 21.03 | 0 |
| | 400 | 100 | 91.95 | 0 |
| | 500 | 100 | 63.07 | 0 |
| | 600 | 100 | 82.17 | 0 |
| | 700 | 100 | 97.96 | 0 |

| Comparative Examples | Reaction temperature (°C) | GHSV = 3000 h⁻¹ | | |
|---|---|---|---|---|
| | | Propane conversion rate (%) | Cn conversion rate (%) | Unreacted propane (vol%) |
| Comparative Example 1 | 300 | 31.58 | 18.22 | 33.62 |
| | 400 | 55.68 | 30.21 | 24.05 |
| | 500 | 86.58 | 48.16 | 6.02 |
| | 600 | 92.16 | 70.13 | 2.51 |
| | 700 | 98.13 | 92.11 | 0.68 |
| Comparative Example 2 | 300 | 40.65 | 20.98 | 28.19 |
| | 400 | 67.68 | 33.56 | 16.95 |
| | 500 | 94.35 | 49.26 | 2.65 |
| | 600 | 95.62 | 77.58 | 1.05 |
| | 700 | 99.98 | 91.68 | 0.08 |
| Comparative Example 3 | 300 | 42.24 | 21.12 | 27.18 |
| | 400 | 65.25 | 33.84 | 16.21 |
| | 500 | 94.69 | 49.36 | 2.17 |
| | 600 | 96.85 | 77.61 | 0.68 |
| | 700 | 100 | 92.68 | 0 |

**Table 3**

| Examples and Comparative Examples | Frequency of DSS (-) | S/C=1.5 13A conversion rate (%) | Amount of carbon deposited (wt%) |
|---|---|---|---|
| Example 1 | 10 | 86.4 | 0 |
| | 100 | 86.4 | 0 |
| | 400 | 86.4 | 0 |
| Example 2 | 10 | 86.3 | 0 |
| | 100 | 86.4 | 0 |
| | 400 | 86.4 | 0.01 |
| Example 3 | 10 | 86.4 | 0 |
| | 100 | 86.3 | 0 |
| | 400 | 86.2 | 0.02 |
| Example 4 | 10 | 86.4 | 0 |
| | 100 | 86.4 | 0.01 |
| | 400 | 86.4 | 0.01 |
| Example 5 | 10 | 86.3 | 0 |
| | 100 | 86.4 | 0 |
| | 400 | 86.3 | 0 |
| Example 6 | 10 | 86.4 | 0.01 |
| | 100 | 86.4 | 0.02 |
| | 400 | 86.4 | 0.04 |
| Comparative Example 1 | 10 | 82.6 | 0 |
| | 100 | 78.2 | 1.2 |
| | 400 | 72.4 | 2.1 |
| Comparative Example 2 | 10 | 81.5 | 2.68 |
| | 100 | 72.4 | 5.12 |
| | 400 | 61.8 | 9.52 |
| Comparative Example 3 | 10 | 72.4 | 6.25 |
| | 100 | 56.5 | 8.15 |
| | 400 | 39.8 | 15.23 |

### INDUSTRIAL APPLICABILITY

The catalyst for decomposing hydrocarbons according to the present invention can exhibit a reduced activation energy by controlling a ratio between a metallic state and a compound state of nickel therein, and is therefore excellent in catalytic activity.

In addition, the catalyst for decomposing hydrocarbons according to the present invention has a strong correlation of electron transfer between a carrier component and nickel. As a result, the catalyst can be enhanced in reforming reactivity of hydrocarbon raw materials as a high carbon (C) content component, and can exhibit an excellent anti-coking property.

## Claims

1. A catalyst for decomposing hydrocarbons, comprising a compound comprising at least nickel and aluminum, and metallic nickel having a particle diameter of 1 to 25 nm, in which bond energies between the metallic nickel and the compound comprising at least nickel and aluminum in the catalyst are 874.5 to 871.5 eV (Ni 2p_{1/2}), 857 to 853 eV (Ni 2p_{3/2}) and 73.5 to 70 eV (Al 2p), and an activation energy of the catalyst is 4 x 10⁴ to 5 x 10⁴ J/mol.

2. The catalyst for decomposing hydrocarbons according to claim 1, wherein a nickel content in the catalyst is 5 to 30% by weight in terms of the metal element, a content of the metallic nickel in the catalyst is 40 to 75% by weight based on the nickel content, and an aluminum content in the catalyst is 15 to 45% by weight in terms of the metal element.

3. The catalyst for decomposing hydrocarbons according to claim 1 or 2, further comprising at least one element selected from the group consisting of an alkali metal element, an alkali earth metal element, a rare earth element and a noble metal element.

4. A process for producing the catalyst for decomposing hydrocarbons as claimed in any one of claims 1 to 3, comprising:
a step of producing a compound comprising nickel and aluminum;
a step of forming a molded body as a catalyst precursor comprising the compound;
a first heat treatment step of conducting decarbonization of an organic binder, removal of water from the catalyst precursor and sintering of the catalyst precursor; and
a second heat treatment step of subjecting the resulting catalyst to reducing treatment to metallize the catalytic metal element therein,
said first heat treatment step further comprising a decarbonization/dehydration step (1) and a sintering step (2), in which a target temperature to be finally reached in the sintering step (2) is set to 920 to 1250°C, a target temperature to be finally reached in the second heat treatment step is set to 600 to 900°C, and a retention time at the target temperature to be finally reached in the second heat treatment step is 1 to 10 hr.

5. A fuel cell system comprising the catalyst for decomposing hydrocarbons as claimed in any one of claims 1 to 3.
